# EUROPÄISCHE PATENTSCHRIFT

(11) **EP 3 931 945 B1**
(45) Veröffentlichungstag und Bekanntmachung des Hinweises auf die Patenterteilung: **04.12.2024**
(21) Anmeldenummer: 20706497.3
(22) Anmeldetag: 21.02.2020
(51) Int. Cl.: H02K 1/28, H02K 1/30

(54) **ROTOR FÜR EINE ELEKTRISCHE MASCHINE MIT EINEM MEHRTEILIGEN ROTORTRÄGER**
ROTOR FOR AN ELECTRIC MACHINE HAVING A MULTIPLE-PART ROTOR CARRIER
ROTOR POURVU D'UN SUPPORT DE ROTOR EN PLUSIEURS PIÈCES POUR UNE MACHINE ÉLECTRIQUE

(30) Priorität: 26.02.2019 DE 102019202563
(43) Veröffentlichungstag der Anmeldung: 05.01.2022
(73) Patentinhaber: ZF Friedrichshafen AG, 88046 Friedrichshafen (DE)
(72) Erfinder: FENN, Peter, 97534 Waigolshausen (DE); WEIDNER, Matthias, 97535 Wasserlosen (DE)
(86) Internationale Anmeldenummer: PCT/EP2020/054645
(87) Internationale Veröffentlichungsnummer: WO 2020/173831

(56) Entgegenhaltungen:
- EP-A1- 0 855 781
- EP-A1- 2 806 539
- WO-A1-2019/008068
- JP-A- 2015 027 119
- JP-A- 2015 091 150

## Beschreibung

Die Erfindung betrifft einen Rotor für eine elektrische Maschine mit einem mehrteiligen Rotorträger.

Ein Rotor, welcher gemäß einer Anwendung einen Bestandteil einer elektrischen Maschine eines Elektro- oder Hybridfahrzeugs darstellen kann, ist beispielsweise mit der DE 10 2007 032 131 A1 bekannt geworden. Der Rotorträger des Rotors umfasst zwei Trägerteile, nämlich ein hohlzylindrisches Umfangswandteil und ein daran endseitig festgelegtes scheibenförmiges Bodenwandteil. Beide Trägerteile sind durch Reibschweißen fest miteinander verbunden. Der Rotorträger ist für eine elektrische Innenläufermaschine vorgesehen, wobei ein Blechpaket in einer dort nicht näher erläuterten Weise auf der Außenumfangsfläche des Umfangswandteils festgelegt werden kann.

Der erwähnte Rotor weist zwar durch dessen Zweiteiligkeit Vorteile bei der Herstellung gegenüber von gießtechnisch und auch gegenüber aus einem Vollmaterial umgeformten, also einteiligen Rotorträgern auf. Gleichwohl bedarf das Reibschweißen der Trägerteile eine aufwändige Vorbearbeitung und zur Erzielung einer besonders festen Verbindung ebenso eine spezielle Ausgestaltung der Fügeflächen, welche eine gewisse einzuhaltende Mindestwandstärke der zu verbindenden Trägerteile voraussetzt. Zudem sind nach dem Schweißvorgang zum Abbau von Verspannungen ein Tempern bzw. ein Glühen und auch eine abschließende spanende Bearbeitung zur Einhaltung von geforderten Fertigungstoleranzen erforderlich.

Die WO 2019/008068 A1 und die EP 0855781 A1 offenbaren gattungsgemäße Rotoren mit den im Oberbegriff des unabhängigen Patentanspruchs angeführten Merkmalen.

Die Erfindung stellt sich von dem genannten Stand der Technik ausgehend die Aufgabe, einen Rotor der eingangs genannten Art weiter zu verbessern und dazu insbesondere einen Rotorträger kostengünstig herzustellen und konstruktiv einfach zu gestalten. Des Weiteren soll der Rotorträger gleichzeitig konstruktiv zur betriebssicheren Festlegung eines Rotorblechpakets ausgebildet sein.

Die vorstehend genannte Aufgabe wird durch einen Rotor mit den im Patentanspruch 1 angegebenen Merkmalen gelöst. Vorteilhafte Ausgestaltungen und Weiterbildungen der Erfindung sind den abhängigen Ansprüchen sowie der nachfolgenden Figurenbeschreibung entnehmbar.

Es wird somit ein Rotor für eine elektrische Maschine mit einem mehrteiligen Rotorträger und einem an diesem angeordneten Blechpaket vorgeschlagen, wobei der Rotorträger ein erstes Trägerteil mit einem sich in Bezug auf eine Drehachse des Rotors axial erstreckenden Zylinderabschnitt zur Anordnung des Blechpakets und ein zweites Trägerteil mit einem Radialabschnitt umfasst. Dabei sind das erste Trägerteil mittels des Zylinderabschnitts und das zweite Trägerteil mittels des Radialabschnitts an einem gegenseitigen Verbindungsbereich fest miteinander verbunden. Das erste Trägerteil und das zweite Trägerteil stehen dabei mittels einer axialen Steckverbindung, insbesondere mittels einer axialen Steckverzahnung in Eingriff.

Es wird im Rahmen der Erfindung zur betriebssicheren Festlegung des Blechpakets vorgeschlagen, das Blechpaket zwischen einem an dem ersten Trägerteil vorgesehenen ersten Axialanschlag und einem an dem zweiten Trägerteil ausgebildeten zweiten Axialanschlag anzuordnen, wobei der erste Axialanschlag durch einen sich an den Zylinderabschnitt anschließenden Radialabschnitt ausgebildet ist und wobei der zweite Axialanschlag durch den Radialabschnitt des zweiten Trägerteils gebildet und radial zu dem Verbindungsbereich angeordnet ist.

Der erste Axialanschlag kann insbesondere gegenüber dem Zylinderabschnitt als ein abgewinkelter oder abgebogener Abschnitt ausgeführt sein und sich radial bei Bedarf über das gesamte Blechpaket erstrecken. Somit kann der Anschlag auf einer gegenüber dem Zylinderabschnitt und einer Fügefläche des Blechpakets deutlich anderen radialen Lage ausgebildet werden. Bei einer am Zylinderabschnitt ausgebildeten und als Axialanschlag dienenden Durchmesserstufe fällt diese üblicherweise im Wesentlichen je nach Bauart der elektrischen Maschine mit einer radial inneren oder äußeren Begrenzung des Blechpakets zusammen. Dadurch wird ein Blechpaket radial einseitig geklemmt und in Folge neigt die radial gegenüberliegende Fläche des Blechpakets zum Auffächern der einzelnen Blechlamellen. Im Gegensatz dazu kann sich der Radialabschnitt bei der vorgeschlagenen Lösung bis deutlich innerhalb der radialen Ausdehnung des Blechpakets erstrecken, insbesondere mindestens bis zu einem Drittel, bis zur Hälfte oder noch darüber hinaus, so dass ein axiales Auffächern des Blechpakets somit effektiv vermieden werden kann.

Der an dem ersten Trägerteil ausgebildete Zylinderabschnitt kann zur Bildung eines Rotors für eine elektrische Innenläufermaschine mit einer radial äußeren Fügefläche ausgeführt sein, wobei der erste und der zweite Axialanschlag radial außerhalb des Zylinderabschnitts und des Verbindungsbereichs der Trägerteile liegen. Bei einem Rotor für eine elektrische Außenläufermaschine sind diese Axialanschläge radial innen zu einer radial innen am Zylinderabschnitt ausgebildeten Fügefläche angeordnet, wobei an dem zweiten Trägerteil durch den dort bereits vorhandenen und üblicherweise nach innen verlaufenden Radialabschnitt, insbesondere zur Verbindung mit einer Rotorwelle oder Rotornabe diesbezüglich keine gesonderten Maßnahmen vorzusehen sind.

Der erfindungsgemäße Rotor zeichnet sich dadurch aus, dass zur Ausbildung der axialen Steckverbindung an der dem Radialabschnitt gegenüber liegenden Stirnseite des ersten Trägerteils in Umfangsrichtung voneinander beabstandete axiale Laschen oder Zähne und zwischen diesen befindliche Ausnehmungen vorgesehen sind, welche mit dazu korrespondierenden Öffnungen am zweiten Trägerteil in Eingriff gebracht sind und weiter dass das erste Trägerteil und das zweite Trägerteil als Blechumformteile ausgebildet sind.

Gemäß einer Weiterbildung ist vorgesehen, dass ein Axialanschlag an dem ersten und/oder zweiten Trägerteil einen gegenüber einen der Radialabschnitte zum Blechpaket vorstehenden Anlagebereich, also einen Axialvorsprung aufweist. Ein solcher Axialvorsprung weist somit im Vergleich zu dem gesamten Radialabschnitt eine geringere radiale Ausdehnung aus. Auf diese Weise wird eine Verkleinerung der am Blechpaket anliegenden Wirkfläche und eine Erhöhung des axialen Anpressdrucks erzeugt, was zu einem besseren Zusammenhalt des Blechpakets, insbesondere unter Temperaturwechselbelastungen und bei hohen Drehzahlen des Rotors führt. Ein solcher Axialvorsprung kann zum Beispiel durch ein Zwischenelement, durch eine spanende Bearbeitung oder mittels Umformen der Trägerteile an deren Radialabschnitten dargestellt werden. Auf diese Weise kann auf einer oder beiden Stirnseiten des Blechpakets außerhalb dieser Axialvorsprünge zu dem Rotorträger ein axialer Zwischenraum erzeugt werden, der sich nach radial innen und/oder außen an dem Axialvorsprung erstrecken kann.

Grundsätzlich kann ein derartiger Axialvorsprung am Rotorträger in Umfangsrichtung geschlossen oder mit einem Öffnungsbereich ausgebildet sein. Gemäß einer vorteilhaften Ausgestaltung können jedoch auch in Umfangsrichtung mehrere Axialvorsprünge vorgesehen sein, welche durch Zwischenräume voneinander separiert sind. Das Rotorblechpaket liegt somit axial lediglich bereichsweise an einzelnen Positionen, insbesondere punktuell oder stempelförmig am Rotorträger an. Die in radialer Richtung erzeugten Zwischenräume und die vorgenannten axialen Zwischenräume können somit Kühlkanäle oder Kühlräume ausbilden, welche zur Ableitung einer Verlustwärme des Rotorblechpakets von Luft oder von einem Kühlfluid durchströmt werden können.

Ergänzend kann der Rotorträger des vorgeschlagenen Rotors radiale Durchgänge aufweisen, welche mit einem am Blechpaket angrenzenden und durch die zuvor genannten radialen und axialen Zwischenräume gebildeten Raumbereiche verbunden sind. Durch diese Durchgänge kann somit ein Kühlfluid ungehindert durch den Rotorträger hindurchtreten und durch den unmittelbaren Kontakt mit dem Blechpaket eine Verlustwärme aufnehmen und abführen. Die radialen Durchgänge können am Rotorträger mit Vorteil an einem stirnseitigen Endbereich des Blechpakets oder an jeder anderen Position vorgesehen sein.

So können am Zylinderabschnitt des ersten Trägerteils axial etwa im Bereich des ersten Axialanschlags erste radiale Durchgänge und auch an der axial gegenüberliegenden Seite zweite radiale Durchgänge ausgebildet sein. Die zweiten radialen Durchgänge können bevorzugt im Bereich der dem Blechpaket zugewandten Axialseite des zweiten Trägerteils vorgesehen sein. Gemäß einer Ausbildungsvariante können die zweiten radialen Durchgänge zumindest teilweise durch Öffnungen gebildet sein, welche im zusammengebauten Zustand zwischen den beiden Trägerteilen im Bereich der Lücken des Verzahnungsprofils verbleiben.

In weiterer günstiger Ausgestaltung des Rotors können die radialen Durchgänge mit den im Bereich der Axialanschläge vorhandenen Zwischenräumen, insbesondere den radialen Zwischenräumen fluchten, so dass dadurch ein ungehinderter Durchtritt eines Kühlfluids durch den Rotorträger hindurch und seitlich am Blechpaket vorbei ermöglicht wird. Insbesondere sind dazu die erläuterten Axialvorsprünge und die Lücken des Verzahnungsprofils am Rotorträger in Umfangsrichtung versetzt zueinander angeordnet.

Das Blechpaket kann an dem Rotorträger durch eine Fügeverbindung, zum Beispiel durch Aufschrumpfen festgelegt werden. Zur Erhöhung der Drehmomentfestigkeit kann es jedoch vorteilhaft sein, zwischen dem ersten Trägerteil und dem Blechpaket eine radiale Formschlussverbindung auszubilden. Dazu können am Zylinderabschnitt des ersten Trägerteils und an der Fügefläche des Blechpakets entsprechende zahnförmige und dazu korrespondierende nutförmige Strukturen, beispielsweise in Form einer Radialverzahnung oder dergleichen ausgebildet sein.

Zur weiteren Verbesserung der Wärmeabfuhr aus dem Blechpaket können radial zwischen dem Rotorträger und dem Blechpaket Axialkanäle vorgesehen sein, welche bei Anwesenheit eines Kühlfluids mit den radialen Durchgängen in Fluidverbindung stehen. Die Axialkanäle können insbesondere gleichzeitig als Elemente der zuvor genannten radialen Formschlussverbindung zwischen dem Rotorträger und dem Blechpaket vorliegen bzw. dienen. Die radiale Formschlussverbindung kann in axialer Richtung zur Führung eines Kühlfluids durchlässig ausgebildet sein. An der Fügefläche des Blechpakets können dazu mehrere in Umfangsrichtung verteilte und sich axial erstreckende Ausnehmungen, insbesondere Nuten ausgebildet sein, in welche am Zylinderabschnitt radial ausgestellte Vorsprünge, insbesondere Zähne eingreifen können. Es ist dabei nicht erforderlich, dass die Vorsprünge am ersten Trägerteil über die gesamte axiale Erstreckung des Zylinderabschnitts ausgebildet sind. Vielmehr genügt es, wenn sich ein Vorsprung jeweils nur über einen Bruchteil, insbesondere etwa zwischen einem Viertel, einem Drittel oder einer Hälfte, der axialen Erstreckung des Zylinderabschnitts erstreckt. Am Umfang des Rotorträgers benachbarte Vorsprünge können axial gestaffelt am Zylinderabschnitt angeordnet sein. Insbesondere kann das Blechpaket zwei Teilpakete umfassen, wobei zumindest ein Teil der Vorsprünge einen gegenseitigen Verbindungsbereich der Teilpakete übergreifen kann. Andere Vorsprünge können an jeweils nur einem Teilpaket eingreifen.

Es wird somit durch die am Umfang des Rotors axial gestaffelte Anordnung von mehreren Axialvorsprüngen, welche gegenüber dem Blechpaket axial verkürzt ausgeführt sein können, einerseits eine zentrierte und drehfeste Anordnung des Rotors auf dem Rotorträger ermöglicht. Andererseits können die mit den Axialvorsprüngen zusammenwirkenden Nuten am Blechpaket über deren gesamte axiale Länge als Kühlfluidkanäle wirken. Durch die gegenüber der axialen Erstreckung des Blechpakets vergleichsweise möglichen kurzen Eingriffslänge der Formschlussverbindung kann das Blechpaket über größere Bereiche direkt, das heißt ohne einer vorherigen Wärmeableitung über bzw. durch den Rotorträger gekühlt werden. Des Weiteren kann in einem Umfangsbereich zwischen jeweils zwei axial verlaufenden Nuten ein Ringsegmentraum zwischen der Fügefläche des ersten Trägerteils und der Fügefläche des Blechpakets dargestellt werden, welches gleichfalls von einem Kühlfluid durchströmt werden kann. Das Blechpaket wird in diesem Fall lediglich abschnittweise durch die Formschlussverbindung auf dem Rotorträger gehalten.

Zur Sicherung der gegenseitigen Verbindung der beiden Trägerteile des Rotorträgers können die Trägerteile mit besonderem Vorteil miteinander verschweißt werden. Dazu können insbesondere im Bereich der Steckverbindung in der axialen Innen-und/oder Außenseite mehrere Schweißbereiche vorgesehen sein. Das Verschweißen kann bereichsweise, insbesondere punktuell und zeitlich im Wesentlichen sequentiell erfolgen, wobei die dabei eingebrachte Prozesswärme im Wesentlichen keinen Verzug des Rotors bewirkt. Ein nachfolgendes Tempern des Rotors und/oder eine Nachbearbeitung sind nicht erforderlich.

Die Erfindung betrifft weiter eine elektrische Maschine mit einem wie zuvor beschriebenen Rotor und mit einem radial zu dem Rotor angeordneten Stator mit einer Statorwicklung.

Nachfolgend wird die Erfindung anhand einer in den Figuren dargestellten Ausführungsform beispielhaft erläutert.

Es zeigen:
- Fig. 1: einen Rotor mit einem zweiteiligen Rotorträger und einem Blechpaket in einer Axialschnittdarstellung,
- Fig. 2: ein erstes Trägerteil des Rotors von Fig. 1 in zwei Ansichten,
- Fig. 3: ein zweites Trägerteil des Rotors von Fig. 1 in zwei Ansichten;

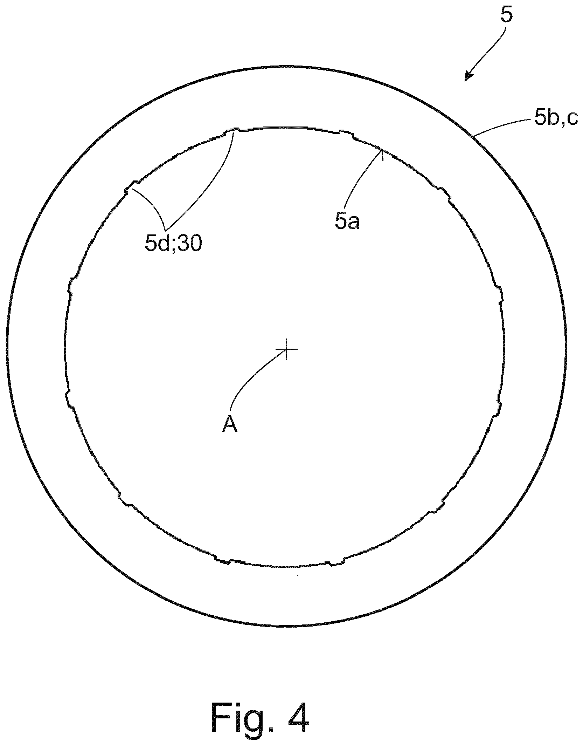

- Fig. 4: eine stirnseitige Ansicht eines Blechpakets.

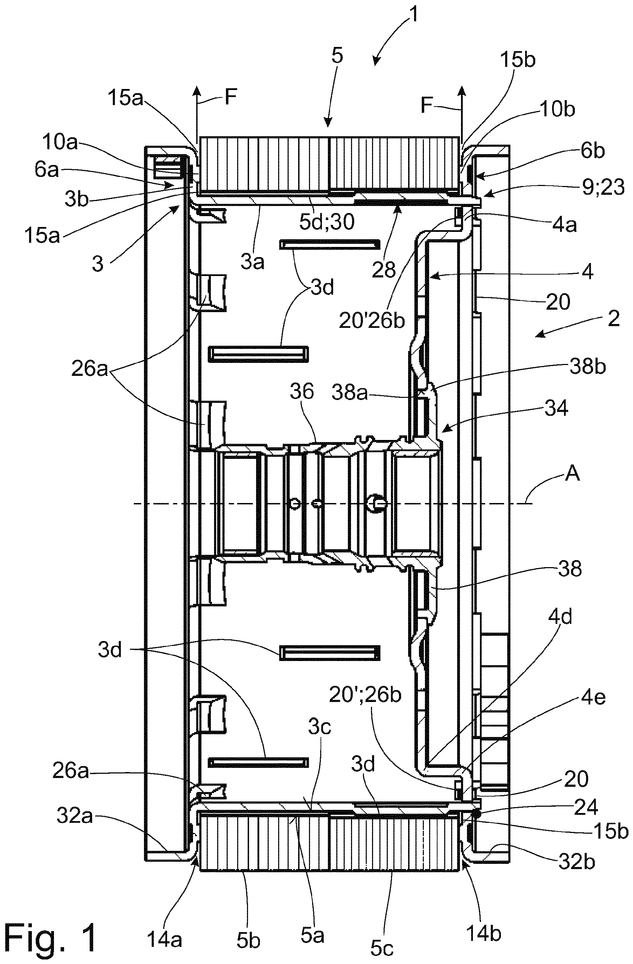

Fig. 1 zeigt einen Rotor 1 für eine elektrische Maschine mit einem mehrteiligen Rotorträger 2 und einem an diesem angeordneten Blechpaket 5. Der Rotor 1 ist vorliegend als Funktionsteil einer in Innenläuferbauweise konzipierten elektrischen Maschine, insbesondere einer permanent erregten Synchronmaschine ausgebildet, welche als Antriebsaggregat eines Hybrid- oder Elektrofahrzeuges vorgesehen ist. Die elektrische Maschine umfasst weiter einen hier zeichnerisch nicht dargestellten Stator mit einer Statorwicklung, welcher in der üblichen Weise unter Ausbildung eines Luftspalts radial zu dem Rotor 1 angeordnet ist.

Das Blechpaket 5 des Rotors 1 ist in bekannter Art und Weise aus axial gestapelten Blechlamellen hergestellt und weist in den Figuren nicht sichtbare Taschen auf, in denen Permanentmagnete angeordnet sind. Der Rotorträger 2 umfasst zunächst ein erstes Trägerteil 3 mit einem sich in Bezug auf eine Drehachse A des Rotors 1 axial erstreckenden Zylinderabschnitt 3a zur Anordnung des Blechpakets 5. Zur Herstellung einer Drehmitnahmeverbindung des Rotors 1 mit weiteren Antriebsstrangkomponenten und zur Lagerung des Rotors 1 ist ein zweites Trägerteil 4 vorgesehen, welches zunächst einen Radialabschnitt 4a umfasst. Die Trägerteile 3, 4 sind aus einem vergleichsweise dünnwandigen, vorzugsweise jedoch hochfesten Stahlblech als Blechumformteile ausgebildet und sind, wie das im Verlauf der weiteren Beschreibung noch erläutert wird, mittels des Zylinderabschnitts 3a und mittels des Radialabschnitts 4a an einem gegenseitigen Verbindungsbereich 9 fest miteinander verbunden. Das Blechpaket 5 ist an einer Fügefläche 3c des Zylinderabschnitts 3a aufgenommen und zwischen einem an dem ersten Trägerteil 3 vorgesehenen ersten Axialanschlag 6a und einem an dem zweiten Trägerteil 4 ausgebildeten zweiten Axialanschlag 6b festgelegt. Dabei ist der zweite Axialanschlag 6b durch den Radialabschnitt 4a gebildet und radial zu dem Verbindungsbereich 9 angeordnet.

Im Ausführungsbeispiel sind beide Axialanschläge 6a, 6b radial außerhalb des Zylinderabschnitts 3a und des Verbindungsbereichs 9 angeordnet. Wie in den Figuren erkennbar, ist der erste Axialanschlag 6a durch einen sich stofflich an den Zylinderabschnitt 3a anschließenden und dort abgewinkelten Radialabschnitt 3b ausgebildet. Der Zylinderabschnitt 3a und der Radialabschnitt 3b sind einteilig ausgebildet. Diese Anschläge sind somit auf einer gegenüber dem Zylinderabschnitt 3a oder einer dort befindlichen Fügefläche 5a des Blechpakets 5 deutlich anderen radialen Lage ausgebildet.

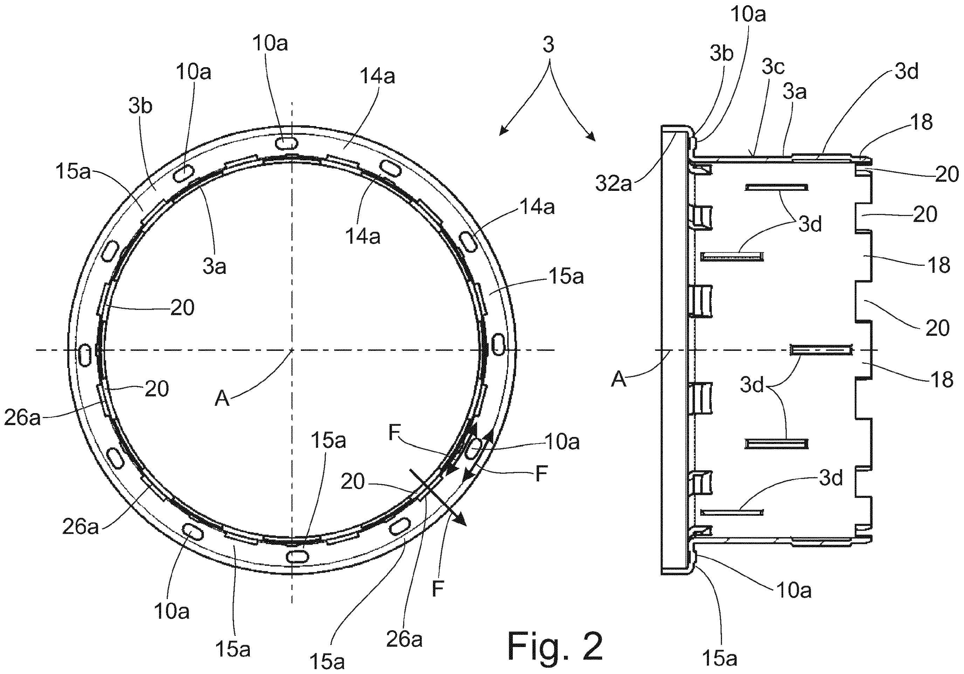

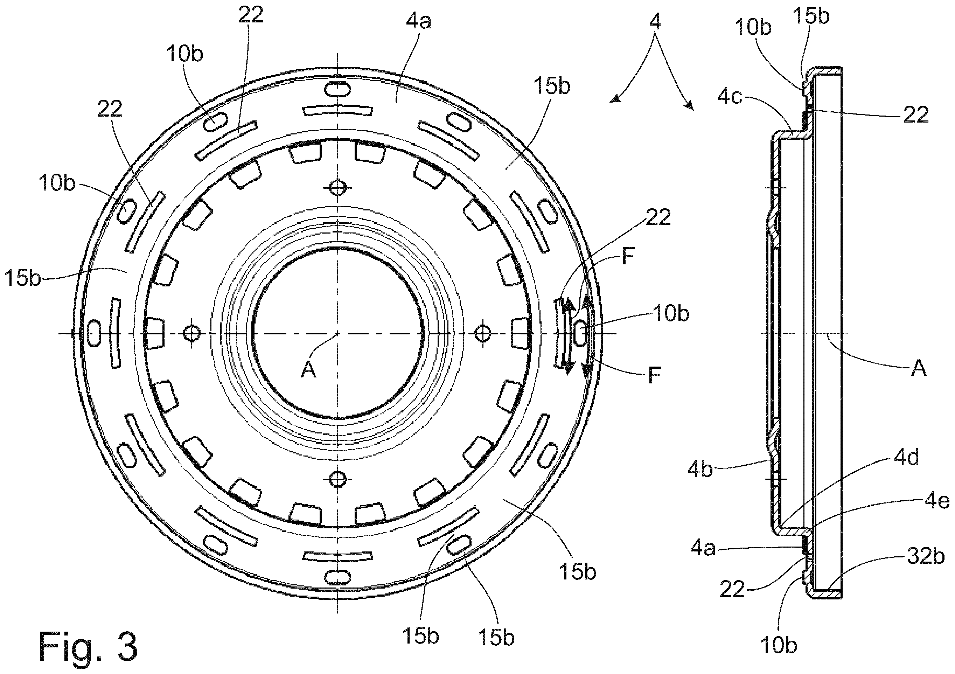

Speziell sind zur Ausbildung der Axialanschläge 6a, 6b an den Trägerteilen 3, 4 jeweils in Umfangsrichtung mehrere einzelne Axialvorsprünge 10a; 10b vorgesehen, welche gegenüber einem Grundkörper der Radialabschnitte 3b, 4a axial zum Blechpaket 5 hervorvorstehen und die sich in Anlage an dem Blechpaket 5 befinden und auf dieses eine axiale Vorspannung ausüben können. Die Axialvorsprünge 10a; 10b sind mittels Umformen der Trägerteile, insbesondere durch Herausdrücken von Blechmaterial erzeugt. Auf diese Weise sind außerhalb dieser Axialvorsprünge 10a, 10b auf beiden Stirnseiten des Blechpakets zu dem Rotorträger 2 jeweils axiale und am Blechpaket 5 durchgehende radiale Zwischenräume 14a, 14b erzeugt worden, wie das in den Fig. 2, 3 erkennbar ist. Das Rotorblechpaket 5 liegt somit axial lediglich an einzelnen Positionen, faktisch punktuell oder stempelförmig am Rotorträger 2 an. Die Axialvorsprünge 10a; 10b sind umfangsmäßig so angeordnet, dass diese bevorzugt außerhalb der Magnetaufnahmetaschen des Blechpakets 5, insbesondere radial innerhalb zu oder zwischen diesen Magnetaufnahmetaschen anliegen. Die Zwischenräume 14a, b bilden am Blechpaket 5 in radialer Richtung zumindest abschnittweise oder durchgehende Radialkanäle 15a, b aus, welche zur Ableitung einer Verlustwärme des Rotorblechpakets 5 von Luft oder von einem Kühlfluid durchströmt werden können und die im Ausführungsbeispiel radiale Austrittsöffnungen aufweisen. Diese Austrittsöffnungen liegen an der elektrischen Maschine den Wickelköpfen eines Statorblechpakets radial gegenüber. Alternativ können die Austrittsöffnungen auch axial ausgebildet sein.

Zur gegenseitigen Verbindung der Trägerteile 3, 4 sind an der dem Radialabschnitt 3b gegenüber liegenden Stirnseite des ersten Trägerteils 3, also am oder benachbart zum Zylinderabschnitt 3a mehrere in Umfangsrichtung voneinander beabstandete axiale Fortsätze bzw. Zähne 18 und zwischen diesen befindliche Ausnehmungen bzw. Lücken 20 in der Art einer axialen Verzahnung bzw. eines axialen Verzahnungsprofils ausgebildet. Gleichzeitig sind an dem Radialabschnitt 4a des zweiten Trägerteils 4 Durchgriffsöffnungen 22 vorgesehen, welche in deren Anordnung und Dimensionierung zu den Zähnen 18 korrespondieren, damit in Eingriff stehen und mit diesen eine Steckverbindung 23, insbesondere in der Art einer Steckverzahnung zwischen den beiden Trägerteilen 3, 4 ausbilden.

Wie in den Figuren weiter erkennbar ist, weist der Rotorträger 2 zudem radiale Durchgänge 26a; 26b auf, welche mit den am Blechpaket 5 angrenzenden Zwischenräume 14a, 14b verbunden sind. Durch diese Durchgänge 26a, 26b kann somit ein Kühlfluid ungehindert in radialer Richtung durch den Rotorträger 2 hindurchtreten und durch den unmittelbaren Kontakt mit dem Blechpaket 5 eine Verlustwärme aufnehmen und abführen. Die radialen Durchgänge 26a, 26b sind vorliegend am Rotorträger 2 an beiden stirnseitigen Endbereichen des Blechpakets 5 vorgesehen. Insbesondere sind am Zylinderabschnitt 3a des ersten Trägerteils 3 axial etwa im Bereich des ersten Axialanschlags 6a erste radiale Durchgänge 26a und an der axial gegenüberliegenden Seite zweite radiale Durchgänge 26b ausgebildet. Die Durchgänge 26b sind somit im Bereich der dem Blechpaket 5 zugewandten Axialseite des zweiten Trägerteils 4 vorgesehen. In Fig. 1 ist weiter erkennbar, dass die Durchgänge 26b durch Öffnungsbereiche 20' gebildet sind, welche im zusammengebauten Zustand zwischen den beiden Trägerteilen 3, 4 im Bereich der Ausnehmungen 20 des Verzahnungsprofils der Steckverbindung 23 verbleiben.

Die radialen Durchgänge 26a, 26b sind so angeordnet, dass diese mit den im Bereich der Axialvorsprünge 10a, 10b vorhandenen Zwischenräumen 14a, b, insbesondere radial fluchten, so dass dadurch ein ungehinderter Durchtritt eines Kühlfluids durch den Rotorträger 2 und seitlich am Blechpaket 5 ermöglicht wird. Insbesondere sind dazu die Axialvorsprünge 10a, 10b der Axialanschläge 6a, 6b zu den Durchgängen 26a, b und damit auch zu den Ausnehmungen 20 des Verzahnungsprofils am Rotorträger 2 in Umfangsrichtung versetzt zueinander angeordnet. In den Fig. 1-3 sind Ausbreitungsrichtungen eines Kühlfluids an den Trägerteilen 3 und 4 in radialer und in Umfangsrichtung mit Pfeilen (F) angedeutet.

Zurückkommend auf das Blechpaket 5 ist dieses an dem Rotorträger 2 durch eine Fügeverbindung durch axiales Aufstecken festgelegt. Zur Erhöhung der Drehmomentfestigkeit ist zwischen dem ersten Trägerteil 3 und dem Blechpaket 5 eine radiale Formschlussverbindung 28, insbesondere in Form einer Radialverzahnung ausgebildet. An der Fügefläche 5a des Blechpakets 5 sind dazu mehrere in Umfangsrichtung verteilte und sich axial erstreckende Ausnehmungen, insbesondere Nuten 5d ausgebildet, in welche am Zylinderabschnitt 3a radial ausgestellte Vorsprünge 3d eingreifen. Dabei erstreckt sich ein Vorsprung 3d jeweils nur über einen Teil, insbesondere etwa zwischen einem Drittel und einer Hälfte der axialen Erstreckung des Zylinderabschnitts 3a. Am Umfang des Rotorträgers 2 benachbarte Vorsprünge 3d sind außerdem axial gestaffelt am Zylinderabschnitt 3a angeordnet. Im Ausführungsbeispiel umfasst das Blechpaket 5 zwei Teilpakete 5b, 5c, wobei zumindest ein Teil der Vorsprünge 3d einen gegenseitigen Verbindungsbereich der Teilpakete 5b, 5c übergreift. Andere Vorsprünge 3d greifen jeweils nur an einem Teilpaket 5b, 5c ein.

Zur weiteren Verbesserung der Wärmeabfuhr aus dem Blechpaket 5 sind radial zwischen dem Rotorträger 2 und dem Blechpaket 5 mehrere am Umfang verteilte Axialkanäle 30 vorgesehen, welche bei Anwesenheit eines Kühlfluids mit den radialen Durchgängen 26a, 26b in Fluidverbindung stehen. Bei dem hier erläuterten Ausführungsbeispiel werden die Axialkanäle 30 durch die Nuten 5d des Blechpakets 5, also durch Elemente der zuvor erwähnten radialen Formschlussverbindung 28 gebildet. Die Formschlussverbindung 28 kann zur Führung eines Kühlfluids in axialer Richtung durchlässig ausgebildet sein, indem sich beispielsweise die zusammenwirkenden Profile von Rotorträger 2 und dem Blechpaket 5 nicht vollflächig berühren, sondern lediglich punkt- oder linienförmig aneinander anliegen und/oder beispielsweise indem die Zähne bzw. Vorsprünge 3d am Zylinderabschnitt 3a axial beidseitig offen und somit durchlässig gestaltet sind.

In weiterer Ausgestaltung des Rotors 1 sind an beiden Trägerteilen 3, 4 Wuchtbereiche 32a, b vorgesehen, welche insbesondere als sich an einen der Radialabschnitte 3b, 4a anschließende Ringbereiche ausgebildet sind. An diesen Wuchtbereichen 32a, b können beim Wuchten des Rotors 1 Wuchtgewichte und/oder Wuchtöffnungen angebracht bzw. eingebracht werden.

Der Rotorträger 2 umfasst weiterhin eine Rotornabe 34 mit einem hohlzylindrischen Wellenabschnitt 36 und mit einem daran angeformten Radialflansch 38, mit welchem das zweite Trägerteil 4 verbunden ist. Dazu weist der der Radialflansch 38 eine Zentrierfläche 38a und einen axialen Anschlag 38b auf. Wie weiter erkennbar, ist das zweite Trägerteil 4 an einem axialen Endbereich des ersten Trägerteils 3 und somit auch an einem axialen Endbereich des Rotors 1 angeordnet. Der Rotor 1 ist wie erkennbar mittels des zweiten Trägerteils 4 zur einfachen Lagerung ausgebildet. Das zweite Trägerteil 4 weist weiter zwei abgewinkelte Bereiche 4d, 4e auf, wobei zu dem Radialabschnitt 4a ein weiterer radialer Abschnitt 4b und ein dazwischen angeordneter rohrförmiger Zylinderabschnitt 4c vorgesehen ist. Dadurch kann eine weitere Versteifung und eine Erhöhung der Tragfähigkeit des Rotors 1 erzielt werden.

Bei der Montage des Rotors 1 wird das Blechpaket 5 bis zur Anlage an den Axialvorsprüngen 10a auf das Trägerteil 3 aufgeschoben. Das Trägerteil 4 wird bis zur Anlage an den Axialvorsprüngen 10b mit dessen Durchgriffsöffnungen 22 auf die Zähne 18 des Trägerteils 3 eingeführt und dort mittels einer Anpresskraft unter einer Vorspannung gehalten. Beim gegenseitigen Zusammenfügen der Trägerteile 3, 4 kann gleichzeitig eine Justage in radialer Richtung und ein Ausgleich von Längentoleranzen in axialer Lage erfolgen. Zur Sicherung der gegenseitigen Verbindung sind die Trägerteile 3, 4 im Bereich der Steckverbindung 23 an der axialen Innen-und/oder Außenseite mittels mehrerer Schweißbereiche 24 miteinander verschweißt. Im montierten Zustand des Blechpakets 5 auf dem Trägerteil 3 kann zur Ausbildung des zweiten Axialanschlags 6b somit auf eine stoßartige Belastung und eine plastische Materialverformung, welche das Blechpaket schädigen kann, verzichtet werden.

### Bezugszeichen

| | | | |
|---|---|---|---|
| 1 | Rotor | 15a, b | Radialkanal |
| 2 | Rotorträger | 18 | Zahn |
| 3 | erstes Trägerteil | 20 | Lücke |
| 3a | Zylinderabschnitt | 20' | Öffnungsbereich |
| 3b | Radialabschnitt | 22 | Durchgriffsöffnung |
| 3c | Fügefläche | 23 | Steckverbindung |
| 3d | Vorsprung | 24 | Schweißbereich |
| 4 | zweites Trägerteil | 26a,b | Durchgang |
| 4a, b | Radialabschnitt | 28 | Formschlussverbindung |
| 4c | Zylinderabschnitt | 30 | Axialkanal |
| 4d, e | Abwinkelung | 32a, b | Wuchtbereich |
| 5 | Blechpaket | 34 | Rotornabe |
| 5a | Fügefläche | 36 | Wellenabschnitt |
| 5b, c | Teilpaket | 38 | Radialflansch |
| 5d | Nut | 38a | Zentrierfläche |
| 6a, b | Axialanschlag | 38b | Anschlag |
| 9 | Verbindungsbereich | A | Drehachse |
| 10a, b | Axialvorsprung | F | Ausbreitungsrichtung Kühlfluid |
| 14a, b | Zwischenraum | | |

## Patentansprüche

1. Rotor (1) für eine elektrische Maschine mit einem mehrteiligen Rotorträger (2) und einem an diesem angeordneten Blechpaket (5), wobei der Rotorträger (2) umfasst
- ein erstes Trägerteil (3) mit einem sich in Bezug auf eine Drehachse (A) des Rotors (1) axial erstreckenden Zylinderabschnitt (3a) zur Anordnung des Blechpakets (5) und
- ein zweites Trägerteil (4) mit einem Radialabschnitt (4a), wobei
- das erste Trägerteil (3) mittels des Zylinderabschnitts (3a) und das zweite Trägerteil (4) mittels des Radialabschnitts (4a) an einem gegenseitigen Verbindungsbereich (9) fest miteinander verbunden sind, wobei
- das erste Trägerteil (3) und das zweite Trägerteil (4) mittels einer axialen Steckverbindung (23) in Eingriff stehen, wobei
- das Blechpaket (5) zwischen einem an dem ersten Trägerteil (3) vorgesehenen ersten Axialanschlag (6a) und einem an dem zweiten Trägerteil (4) ausgebildeten zweiten Axialanschlag (6b) festgelegt ist, wobei
- der erste Axialanschlag (6a) durch einen sich an den Zylinderabschnitt (3a) anschließenden Radialabschnitt (3b) ausgebildet ist,
- der zweite Axialanschlag (6b) durch den Radialabschnitt (4a) gebildet und radial zu dem Verbindungsbereich (9) angeordnet ist,
**dadurch gekennzeichnet, dass**
- die axiale Steckverbindung (23) insbesondere eine axiale Steckverzahnung ist, dass
- zur Ausbildung der axialen Steckverbindung (23) an der dem Radialabschnitt (3b) gegenüber liegenden Stirnseite des ersten Trägerteils (3) in Umfangsrichtung voneinander beabstandete axiale Laschen oder Zähne (18) und zwischen diesen befindliche Ausnehmungen (20) vorgesehen sind, welche mit dazu korrespondierenden Öffnungen (22) am zweiten Trägerteil (4) in Eingriff gebracht sind und dass
- das erste Trägerteil (3) und das zweite Trägerteil (4) als Blechumformteile ausgebildet sind.

2. Rotor nach Anspruch 1, **dadurch gekennzeichnet, dass** sich der Radialabschnitt (4a) radial über die Öffnungen (22) hinaus erstreckt und den Zylinderabschnitt (3a) radial übergreift.

3. Rotor nach Anspruch 1 oder 2, **dadurch gekennzeichnet, dass** der Rotorträger (2) eine Rotornabe (34) umfasst, welche mit dem zweiten Trägerteil (4) verbunden ist.

4. Rotor nach Anspruch 3, **dadurch gekennzeichnet, dass** die Rotornabe (34) einen hohlzylindrischen Wellenabschnitt (36) und einen daran angeformten Radialflansch (38) aufweist, mit welchem das zweite Trägerteil (4) verbunden ist.

5. Rotor nach einem der Ansprüche 1 bis 4, **dadurch gekennzeichnet, dass** die Trägerteile (3, 4) miteinander verschweißt sind.

6. Rotor nach einem der Ansprüche 1 bis 5, **dadurch gekennzeichnet, dass** ein Axialanschlag (6a, 6b) einen gegenüber einen der Radialabschnitte (3b, 4a) zum Blechpaket (5) vorstehenden Axialvorsprung (10a; 10b) aufweist.

7. Rotor nach Anspruch 6, **dadurch gekennzeichnet, dass** in Umfangsrichtung mehrere Axialvorsprünge (10a; 10b) vorgesehen sind, welche durch Zwischenräume (14a; 14b) voneinander separiert sind.

8. Rotor nach Anspruch 7, **dadurch gekennzeichnet, dass** der Rotorträger (2) radiale Durchgänge (26a; 26b) aufweist, welche mit den Zwischenräumen (14a, b) verbunden sind.

9. Rotor nach einem der Ansprüche 1 bis 8, **dadurch gekennzeichnet, dass** zwischen dem ersten Trägerteil (3) und dem Blechpaket (5) eine radiale Formschlussverbindung (28) ausgebildet ist.

10. Rotor nach einem der Ansprüche 1 bis 9, **dadurch gekennzeichnet, dass** radial zwischen dem Rotorträger (2) und dem Blechpaket (5) Axialkanäle (30) vorgesehen sind, welche bei Anwesenheit eines Kühlfluids mit den ersten und/oder den zweiten radialen Durchgänge (26a, 26b) in Fluidverbindung stehen.

11. Elektrische Maschine mit einem Stator mit einer Statorwicklung und mit einem gemäß einem der Ansprüche 1 bis 10 ausgebildeten und radial zu dem Stator angeordneten Rotor.

## Claims

1. Rotor (1) for an electric machine having a multi-part rotor carrier (2) and a laminated core (5) arranged thereon, wherein the rotor carrier (2) comprises
- a first carrier part (3) having a cylinder portion (3a), which extends axially with respect to an axis of rotation (A) of the rotor (1), for arranging the laminated core (5), and
- a second carrier part (4) having a radial portion (4a), wherein
- the first carrier part (3) and the second carrier part (4) are fixedly connected to one another at a mutual connecting region (9), the first carrier part by means of the cylinder portion (3a) and the second carrier part by means of the radial portion (4a), wherein
- the first carrier part (3) and the second carrier part (4) are in engagement by means of an axial plug-in connection (23), wherein
- the laminated core (5) is secured between a first axial stop (6a) provided on the first carrier part (3) and a second axial stop (6b) formed on the second carrier part (4), wherein
- the first axial stop (6a) is formed by a radial portion (3b) adjoining the cylinder portion (3a),
- the second axial stop (6b) is formed by the radial portion (4a) and is arranged radially with respect to the connecting region (9),
**characterized in that**
- the axial plug-in connection (23) is in particular an axial plug-in toothing system, **in that**
- to form the axial plug-in connection (23), axial lugs or teeth (18) and recesses (20) situated therebetween, which are spaced apart from one another in the circumferential direction, are provided on the end face of the first carrier part (3) that is situated opposite to the radial portion (3b) and are brought into engagement with corresponding openings (22) in the second carrier part (4), and **in that**
- the first carrier part (3) and the second carrier part (4) are formed as shaped sheet metal parts.

2. Rotor according to Claim 1, **characterized in that** the radial portion (4a) extends radially beyond the openings (22) and radially overlaps the cylinder portion (3a).

3. Rotor according to Claim 1 or 2, **characterized in that** the rotor carrier (2) comprises a rotor hub (34) which is connected to the second carrier part (4).

4. Rotor according to Claim 3, **characterized in that** the rotor hub (34) has a hollow cylindrical shaft portion (36) and a radial flange (38) which is integrally formed thereon and to which the second carrier part (4) is connected.

5. Rotor according to one of Claims 1 to 4, **characterized in that** the carrier parts (3, 4) are welded to one another.

6. Rotor according to one of Claims 1 to 5, **characterized in that** an axial stop (6a, 6b) has an axial projection (10a; 10b) which projects with respect to one of the radial portions (3b, 4a) towards the laminated core (5).

7. Rotor according to Claim 6, **characterized in that** a plurality of axial projections (10a; 10b) are provided in the circumferential direction and are separated from one another by interspaces (14a; 14b).

8. Rotor according to Claim 7, **characterized in that** the rotor carrier (2) has radial passages (26a; 26b) which are connected to the interspaces (14a, b).

9. Rotor according to one of Claims 1 to 8, **characterized in that** a radial form-fitting connection (28) is formed between the first carrier part (3) and the laminated core (5) .

10. Rotor according to one of Claims 1 to 9, **characterized in that** axial channels (30) are provided radially between the rotor carrier (2) and the laminated core (5) and are fluidically connected to the first and/or the second radial passages (26a, 26b) in the presence of a cooling fluid.

11. Electric machine having a stator with a stator winding and having a rotor which is designed in accordance with one of Claims 1 to 10 and which is arranged radially with respect to the stator.

## Revendications

1. Rotor (1) pour une machine électrique avec un support de rotor (2) en plusieurs parties et un noyau feuilleté (5) agencé sur celui-ci, le support de rotor (2) comprenant
- une première partie de support (3) avec une section cylindrique (3a) s'étendant axialement par rapport à un axe de rotation (A) du rotor (1) pour agencer le noyau feuilleté (5) et
- une deuxième partie de support (4) avec une section radiale (4a),
- la première partie de support (3), au moyen de la section cylindrique (3a), et la deuxième partie de support (4), au moyen de la section radiale (4a), étant reliées fixement l'une à l'autre au niveau d'une zone de liaison mutuelle (9),
- la première partie de support (3) et la deuxième partie de support (4) étant en prise au moyen d'une liaison axiale enfichable (23),
- le noyau feuilleté (5) étant fixé entre une première butée axiale (6a) prévue sur la première partie de support (3) et une deuxième butée axiale (6b) formée sur la deuxième partie de support (4),
- la première butée axiale (6a) étant formée par une section radiale (3b) se raccordant à la section cylindrique (3a),
- la deuxième butée axiale (6b) étant formée par la section radiale (4a) et étant agencée radialement par rapport à la zone de liaison (9),
**caractérisé en ce que**
- la liaison axiale enfichable (23) est en particulier une denture axiale enfichable, **en ce que**
- pour la réalisation de la liaison axiale enfichable 23), il est prévu, sur la face frontale de la première partie de support (3) opposée à la section radiale (3b), des pattes ou des dents axiales (18) espacées les unes des autres dans la direction circonférentielle et des évidements (20) se trouvant entre celles-ci, qui sont amenés en prise avec des ouvertures (22) correspondantes sur la deuxième partie de support (4), et **en ce que**
- la première partie de support (3) et la deuxième partie de support (4) sont réalisées sous forme de parties en tôle déformée.

2. Rotor selon la revendication 1, **caractérisé en ce que** la section radiale (4a) s'étend radialement au-delà des ouvertures (22) et chevauche radialement la section cylindrique (3a).

3. Rotor selon la revendication 1 ou la revendication 2, **caractérisé en ce que** le support de rotor (2) comprend un moyeu de rotor (34) qui est relié à la deuxième partie de support (4).

4. Rotor selon la revendication 3, **caractérisé en ce que** le moyeu de rotor (34) présente une section d'arbre cylindrique creuse (36) et une bride radiale (38) formée sur celle-ci, à laquelle est reliée la deuxième partie de support (4).

5. Rotor selon l'une des revendications 1 à 4, **caractérisé en ce que** les parties de support (3, 4) sont soudées entre elles.

6. Rotor selon l'une des revendications 1 à 5, **caractérisé en ce qu'**une butée axiale (6a, 6b) présente une saillie axiale (10a ; 10b) faisant saillie par rapport à l'une des portions radiales (3b, 4a) vers le noyau feuilleté (5).

7. Rotor selon la revendication 6, **caractérisé en ce que** plusieurs saillies axiales (10a ; 10b) sont prévues dans la direction circonférentielle, lesquelles sont séparées les unes des autres par des espaces intermédiaires (14a ; 14b).

8. Rotor selon la revendication 7, **caractérisé en ce que** le support de rotor (2) présente des passages radiaux (26a ; 26b) qui sont reliés aux espaces intermédiaires (14a, b).

9. Rotor selon l'une des revendications 1 à 8, **caractérisé en ce qu'**une liaison radiale par complémentarité de forme (28) est formée entre la première partie de support (3) et le noyau feuilleté (5).

10. Rotor selon l'une des revendications 1 à 9, **caractérisé en ce que** des canaux axiaux (30) sont prévus radialement entre le support de rotor (2) et le noyau feuilleté (5), lesquels sont en communication fluidique avec les premiers et/ou les deuxièmes passages radiaux (26a, 26b) en présence d'un fluide de refroidissement.

11. Machine électrique comprenant un stator avec un enroulement statorique et un rotor configuré selon l'une des revendications 1 à 10 et agencé radialement par rapport au stator.
